# EUROPEAN PATENT APPLICATION

(11) **EP 2 933 543 A1**
(43) Date of publication of application: **21.10.2015**
(21) Application number: 15161317.1
(22) Date of filing: 27.03.2015
(51) Int. Cl.: F16L 57/04, F16L 59/14, F16L 5/04, F16L 11/12

(54) **Sleeve for covering wiring and piping**

(30) Priority: 15.04.2014 ES 201430518 U
(71) Applicant: Espiroflex, S.A., 08130 Santa Perpetua de Mogoda (Barcelona) (ES)
(72) Inventor: Sánchez Hellín, Bruno, 08130 Santa Perpetua de Mogoda (Barcelona) (ES)
(74) Representative: Ungria López, Javier

(57) **Abstract**

The invention relates to a sleeve (1) for covering wiring and piping indicated for gas conduits. The sleeve comprises a layer (2) made of a material that is highly fire-resistant and highly impermeable to gas. Preferably, the layer (2) is made of polyurethane and has a thickness comprised between 10 % and 100 % of the total thickness of the sleeve (1).

## Description

### Objet of the invention

The present invention relates to a sleeve for covering wiring and piping, which has been specifically treated so as to provide it with a fire-resistant and anti-gas-leakage effect, by inserting into the sleeve a layer of material that is highly impermeable to gas and with a low degree of flammability.

It is applicable in the industry dedicated to the design, manufacture and marketing of covering and channeling systems for piping or wiring, and more particularly in the industry dedicated to the design and manufacture of pipe-covering sleeves.

### Technical problem to be solved and background of the invention

Currently, there are a multitude of sleeve types for covering wiring and/or piping, specifically designed to prevent heat loss/increase in pipes, to electrically insulate an electrical conduit, or to retain any gas leakage.

Typically, said covering sleeves have to comply with certain requirements specified in different standards such as UNE standards, requirements relative to the fire-resistance effect that some of these sleeves must have, or resistance against blows, or their capacity to bend while maintaining their integrity.

In the particular case of gas conduits, which tend to take the form of copper pipes installed either outdoors or in walls and floors, the sleeves covering said pipes, if said pipes are covered, tend to be made of plastic material, preferably PVC.

PVC is a plastic widely used in covering sleeves, which provides an acceptable compromise in terms of price and mechanical properties.

Nevertheless, it has been verified that there are other materials which, for the specific application of a covering for gas conduits, significantly improve the properties regarding fire-resistance and gas impermeability, relative to the sleeves made of PVC.

The present invention relates to a sleeve for covering wiring and piping, specially indicated for gas conduits, which comprises a layer made of material that is highly resistant to fire, to abrasion and to high temperatures, while providing a degree of impermeability to gas leakages that has not been achieved by conventional sleeves.

At the same time, the sleeve that is being described also improves the mechanical properties with respect to other conventional sleeves, in terms of resistance against blows, shearing, crushing and accidental perforations.

### Description of the invention

The present invention relates to a sleeve for covering wiring and piping indicated for gas conduits, which comprises a layer made of a material that is highly fire-resistant and highly impermeable to gas.

According to a preferred embodiment of the invention, said layer is made of polyurethane and has a thickness comprised between 10 % and 100 % of the total thickness of the sleeve.

Preferably, said layer is the outermost layer of the sleeve.

In another embodiment, said layer is located at a depth of between 5 % and 95 % of the thickness of the sleeve.

### Brief description of the figures

The present invention will be better understood in view of the following figure:

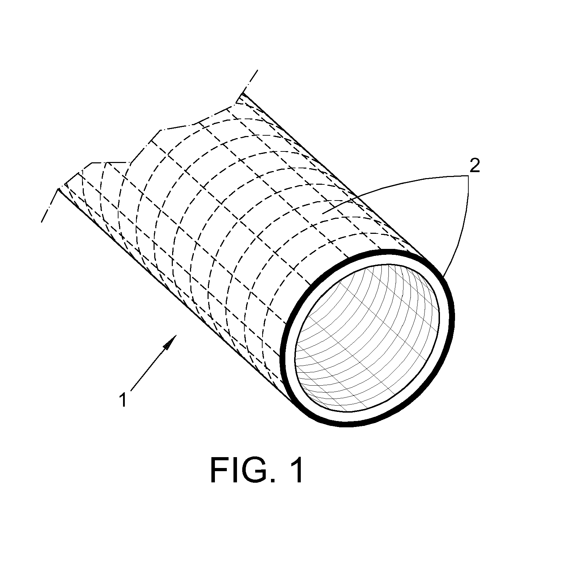

Figure 1: Shows a cross-sectional perspective view of the sleeve.

### Detailed description of an embodiment of the invention

The present invention relates to a sleeve (1) for covering wiring and/or piping, especially indicated for gas conduits, which comprises a layer (2) of a material that is highly resistant to fire, to abrasion and to high temperatures, while providing a degree of impermeability to gas leakages that has not been achieved by conventional sleeves.

In a preferred embodiment of the sleeve (1) object of the present invention, the aforementioned layer (2) of the material that is highly fire-resistant and impermeable to gas is made of a plastic material, and comprises a layer (2) of polyurethane (PU), which confers it with the aforementioned properties of resistance to fire, to abrasion and to high temperatures, as well as impermeability to possible gas leakages, which conventional sleeves currently used for covering gas conduits do not achieve.

Figure 1 shows a schematic view of an embodiment of the sleeve (1) object of the present invention in which the polyurethane layer (2) is the outermost layer (2) of the sleeve (1).

The sleeve (1) object of the present invention is indicated for resisting a wide range of environmental temperatures, withstanding, without problems or deformations, significant temperatures that may range between -30 °C and 120 °C.

Furthermore, the present sleeve (1) for covering wiring and piping is resistant to chemical hydrolysis and to attacking by microorganisms.

The sleeve (1) comprises a very low degree of polluting and harmful fume emissions in the event of a fire, and recovers its properties depending on the cycles of environmental stress.

The polyurethane layer (2) comprised in the sleeve (1) of the present invention may be located at different depths along the thickness of the sleeve (1). At the same time, the thickness of said polyurethane layer (2) may vary, according to the different embodiments indicated for each location and to specific use conditions.

The sleeve (1) object of the present invention further comprises a high mechanical resistance against shearing, perforation or punching, blows and crushing or deformation, therefore being especially useful for covering curved conduit lengths, which have small curvature ratios.

The sleeve (1) is preferably manufactured by extrusion, and is free of heavy metals and halogen materials.

## Claims

1. A sleeve (1) for covering wiring and piping indicated for gas conduits, **characterized in that** it comprises a layer (2) made of a material that is highly fire-resistant and highly impermeable to gas.

2. The sleeve (1) for covering wiring and piping according to claim 1, **characterized in that** said layer (2) is made of polyurethane.

3. The sleeve (1) for covering wiring and piping according to claim 1, **characterized in that** said layer (2) has a thickness comprised between 10 % and 100 % of the total thickness of the sleeve (1).

4. The sleeve (1) for covering wiring and piping according to claim 1, **characterized in that** said layer (2) is the outermost layer (2) of the sleeve (1).

5. The sleeve (1) for covering wiring and piping according to claim 1, **characterized in that** said layer (2) is located at a depth of between 5 % and 95 % of the thickness of the sleeve (1).
